# EUROPÄISCHE PATENTSCHRIFT

(11) **EP 2 533 392 B1**
(45) Veröffentlichungstag und Bekanntmachung des Hinweises auf die Patenterteilung: **26.09.2018**
(21) Anmeldenummer: 12004370.8
(22) Anmeldetag: 08.06.2012
(51) Int. Cl.: H02J 7/35, H02J 3/32

(54) **Vorrichtung zur Versorgung eines Hauses mit elektrischer Energie**
Dispositif d'alimentation d'une habitation en énergie électrique
Device for supplying a house with electrical energy

(30) Priorität: 07.06.2011 DE 102011103449
(43) Veröffentlichungstag der Anmeldung: 12.12.2012
(73) Patentinhaber: E3/DC GmbH, 49074 Osnabrück (DE)
(72) Erfinder: Piepenbrink, Andreas, Dr., 49084 Osnabrück (DE); Gutendorf, Peter, 49076 Osnabrück (DE)
(74) Vertreter: Kronthaler, Wolfgang N.K.

(56) Entgegenhaltungen:
- EP-A1- 2 246 967
- WO-A1-2007/014424
- US-A1- 2010 207 448
- US-A1- 2010 320 842

## Beschreibung

### GEBIET DER ERFINDUNG

Die Erfindung betrifft eine Vorrichtung zur Versorgung eines Hauses mit elektrischer Energie nach der im Oberbegriff des Patentanspruches 1 näher definierten Art.

### STAND DER TECHNIK

Aus der Praxis sind unterschiedlichste Vorrichtungen zur Versorgung eines Hauses mit elektrischer Energie aus einer Wechselspannungsquelle und/oder einer Gleichspannungsquelle bekannt. In der Regel erfolgt die Versorgung eines dreiphasigen Hausnetzes mit elektrischer Leistung aus einem öffentlichen Versorgungsnetz über einen Hausanschluss. Andere externe Energienetze im vorliegenden Sinn können aber auch insuläre Netze darstellen, welche z. B. durch dezentrale Windenergieanlagen und/oder Blockheizkraftwerke gebildet werden. Ergänzt wird die Versorgung häufig durch Energie aus einer Gleichspannungsquelle, wobei meist regenerative Energie, welche durch eine lokale Energieerzeugungseinrichtung wie eine Photovoltaikanlage gewonnen wird, in einem Energiespeicher, üblicherweise einem Akkumulator, gespeichert und zum Ausgleich von Erzeugungs- und Verbrauchsschwankungen wie auch zur Notstromversorgung bereit gestellt wird. Erzeugt die Photovoltaikanlage bei z. B. guten Wetterverhältnissen viel Energie, kann die Stromversorgung des Hauses vollständig hierüber erfolgen und überschüssige Energie gespeichert oder in das öffentliche Stromnetz eingespeist werden. Wenn die Photovoltaikanlage weniger Energie erzeugt als der Haushalt verbraucht, wird der Energiebedarf des Hausnetzes aus der in der Energiespeichereinheit gespeicherten Energie und aus dem öffentlichen Energienetz gedeckt.

Bekannte derartige Hausenergieanlagen sind in der Praxis häufig komplex bezüglich ihrer Verdrahtung bzw. Verkabelung zwischen den Komponenten untereinander und der Verbindung mit einem Hausanschlusskasten, über den das Hausnetz an das öffentliche Versorgungsnetz angeschlossen ist. Die Folge sind ein beträchtlicher Installationsaufwand und oft eine optisch störende, einen größeren Bauraum beanspruchende Anlage.

In der US 2010/207448 ist beispielsweise eine Lastmanagementsteuerung für eine herkömmliche Haushaltsstrominstallation beschrieben, bei der Wechselrichter einer Energieerzeugungseinrichtung und einer Energiespeichereinheit vorgesehen sind.

### OFFENBARUNG DER ERFINDUNG

### TECHNISCHE AUFGABE

Es ist Aufgabe der vorliegenden Erfindung, eine Vorrichtung zur Versorgung eines Hauses mit elektrischer Energie nach der eingangs genannten Art derart weiter zu bilden, dass eine bauraumtechnisch optimierte und optisch ansprechende Anlage mit möglichst einfacher Verkabelung geschaffen wird.

### TECHNISCHE LÖSUNG

Diese Aufgabe wird mit einer Vorrichtung zur Versorgung eines Hauses mit elektrischer Energie gemäß Patentanspruch 1 gelöst, weitere erfindungsgemäße Ausgestaltungen werden durch die abhängigen Ansprüche offenbart. Eine beispielhafte Lösung umfasst eine Netzanschlusseinheit zur Energieflussverbindung mit einem externen Energienetz und eine Lastanschlusseinheit für ein dreiphasiges Hausnetz, wobei eine mit Wechselrichtereinheiten einer Energieerzeugungseinrichtung und einer Energiespeichereinheit elektrisch leitend verschaltbare Leitungsschleife zwischen der Netzanschlusseinheit und der Lastanschlusseinheit angeordnet ist. Die Leitungsschleife ist dabei durch ein Gehäuse von Wechselrichter-, Energiespeicher-, Steuer- und Schalteinheiten zur geräteinternen vollständigen dreiphasigen Energiemessung mittels eines zugeordneten Messmoduls geführt.

### VORTEILHAFTE WIRKUNGEN UND WEITERBILDUNGEN

Die Erfindung hat den Vorteil, dass unabhängig von Art und Anzahl der Energieerzeugungseinrichtung und deren Wechselrichter aufgrund der geräteinternen Energiemessung bekannt ist, wie viel an Produktionsleistung und Verbrauch vorliegt und ein situationsangepasstes Energiemanagement möglich ist, wobei die Messung des Verbrauchstroms, welche bei herkömmlichen Lösungen über externe Zähler mit Schnittstellen erfolgt, wie auch die Einspeisung von elektrischer Energie aus der Energieerzeugungseinrichtung oder der Energiespeichereinheit über die Leitungsschleife ohne zusätzliche externe Smartmeter und Kabel durchgeführt werden kann.

Wenn die Netzanschlusseinheit und die Lastanschlusseinheit des Hausnetzes auf herkömmliche Weise in einem Hausanschlusskasten angeordnet sind, kann die Leitungsschleife aus diesem herausgeführt und in diesen zurückgeführt werden, wobei die weg- und rückführenden Schleifenbereiche vorzugsweise zu einem zu dem Gehäuse führenden Kabel zusammengefasst sind.

Im Unterschied zu herkömmlichen Lösungen, bei denen im Hausanschlusskasten ein dreiphasiges Kabel von dem Netzanschluss an das öffentliche Versorgungsnetz in das Hausnetz mit nachgeordnetem dreiphasigen Zähler führt und jeweils eine einphasige Verbindung zu den Wechselrichtereinheiten und zur Einspeisung von und zu dem Hausanschlusskasten zusätzlichen Smartmetern führt, wird die dreiphasige Leitung zwischen öffentlichem Netz und Hausnetz bei der erfindungsgemäßen Lösung im Hausanschlusskasten quasi aufgetrennt und die dreiphasige Leitung in einer Schleife durch das Gehäuse der Wechselrichter-, Energiespeicher- und Schalteinheiten geführt, in dem geräteintern eine komplette dreiphasige Energiemessung des Hausnetzes und aller Energieflüsse erfolgt.

In einer zweckmäßigen Ausführung kann die Aus- und Einführung der Leitungsschleife zwischen einer an der Netzanschlusseinheit versorgungsnetzseitig vorgeschalteten Bezugs-/Einspeisemessvorrichtung und einer an der Lastanschlusseinheit hausseitig vorgeschalteten Sicherungseinheit in dem Hausanschlusskasten angeordnet sein.

Besonders vorteilhaft ist es, wenn die erfindungsgemäße Vorrichtung einen Anschluss an eine Energieerzeugüngseinrichtung, insbesondere eine Photovoltaikanlage, zum Erzeugen von Energie aus einer insbesondere regenerativen Energiequelle umfasst, wobei der Energieerzeugungseinrichtung eine erste Wechselrichtereinheit zugeordnet ist.

Eine zweite Wechselrichtereinheit kann der insbesondere als Akkumulatorvorrichtung ausgebildeten Energiespeichereinheit zugeordnet sein.

Weiterhin ist es zweckmäßig, wenn das Messmodul neben der ersten Messvorrichtung zur dreiphasigen Messung der elektrischen Leistung in der Leitungsschleife zudem eine zweite Messvorrichtung zur Messung der von einer Energieerzeugungseinrichtung zugeführten elektrischen Leistung aufweist.

Eine sehr kompakte Lösung mit entsprechend verringertem Installations- und Verkabelungsaufwand kann erreicht werden, wenn wenigstens die zweite Messvorrichtung und mithin der Zähler der Energieerzeugungseinrichtung und vorzugsweise auch die erste Messvorrichtung, d. h. der Eigenstromzähler, in dem beispielsweise als Schaltschrank ausgestalteten Gehäuse angeordnet sind.

In einer bevorzugten Ausführung bilden mithin die erste und die zweite Messvorrichtung, welche vorzugsweise als intelligente, kommunikationsfähige Zähler, sogenannte Smartmeter ausgeführt sind, das Messmodul, das in der dreiphasigen mit den Wechselrichtereinheiten der Energieerzeugungseinrichtung und der Energiespeichereinheit elektrisch leitend verschaltbaren Leitungsschleife zwischen der Netzanschlusseinheit und der Lastanschlusseinheit angeordnet ist.

Dieses Messmodul kann bevorzugt in dem Gehäuse der Wechselrichtereinheiten und des Energiespeichers angeordnet werden oder aber auch als separater Zählerkasten in räumlicher Nähe hierzu.

Bei einer Vorrichtung, welche vorzugsweise einen Anschluss an eine Energieerzeugungseinrichtung, insbesondere eine Photovoltaikanlage, zum Erzeugen von Energie aus einer regenerativen Energiequelle mit einer zugeordneten, ersten Wechselrichtereinheit; eine Energiespeichereinheit, insbesondere eine Akkumulatorvorrichtung, zum Speichern von Energie mit einer zugeordneten, zweiten Wechselrichtereinheit; eine Netzanschlusseinheit zur Energieflussverbindung mit einem externen Energienetz; eine Lastanschlusseinheit für ein dreiphasiges Hausnetz; wenigstens eine Steuervorrichtung und Schaltvorrichtung zur Energieflusssteuerung; eine erste Messvorrichtung zur dreiphasigen Messung der elektrischen Leistung der an der Lastanschlusseinheit anliegenden elektrischen Leistung des Hausnetzes und gegebenenfalls eine zweite Messvorrichtung zur Messung der am Anschluss der Energieerzeugungseinrichtung zugeführten elektrischen Leistung umfasst, kann die Schaltvorrichtung mit den Wechselrichtereinheiten der Energieerzeugungseinrichtung und der Energiespeichereinheit vorteilhaft integral in dem Gehäuse angeordnet sein.

Eine dermaßen gestaltete Vorrichtung zur Versorgung eines Hauses mit elektrischer Energie hat den Vorteil, dass durch die Integration der Schaltvorrichtung in das Gehäuse der Wechselrichtereinheiten dieses als ein kompakter Schaltschrank ausgebildet werden kann, in dem die Verdrahtung mit den Wechselrichtereinheiten, vorzugsweise einer kombinierten Solar-/Batteriewechselrichtereinheit, und der Energiespeichereinheit angeordnet ist. Hierdurch reduziert sich nicht nur der Installationsaufwand bezüglich der Verdrahtung bzw. Verkabelung, da eine Verkabelung zwischen zwei Schaltschränken bzw. die Verdrahtung zwischen einem separaten Schaltschrank und Wechselrichtergeräten entfallen kann, sondern es wird zudem eine bauraumtechnisch optimierte und optisch ansprechende abgeschlossene Einheit ohne für nichtfachliche Anlagennutzer bzw. Kunden zugängliche Hochspannungskontakte geschaffen. Die Schalteinrichtung kann dabei einen eigenen Kasten in dem Gehäuse bilden oder integral mit anderen Komponenten in einer Einhausung innerhalb des Gehäuses untergebracht werden.

Die Steuervorrichtung, welche bei entsprechender Ausgestaltung als intelligentes Energiemanagementsystem mit einer Rechnereinheit sämtliche Energieflüsse und die Funktion der Komponenten steuern und überwachen kann, kann ebenfalls platzsparend in das Gehäuse integriert sein.

Die in dem Gehäuse angeordnete Energiespeichereinheit kann gemäß einer bevorzugten Ausführung der Erfindung als Akkumulatorvorrichtung mit modularen Aufnahmeplätzen zur Aufnahme austauschbarer Batterien ausgebildet sein, womit die Batterien getauscht und im montierten Zustand des Gehäuses ein- und ausgebaut werden können. Weiterhin kann das an sich mit geringem Gewicht realisierbare Gehäuse auf diese Art und Weise ohne Batterien transportiert und montiert werden.

Grundsätzlich kann das Gehäuse ein auf einem Boden stehendes Standgehäuse, beispielsweise mit einer Standsäule zur Platzierung von Anzeigeeinheiten der Messvorrichtungen in einer leicht ablesbaren Höhe, oder als Wandmontagegehäuse ausgebildet sein.

Weitere Vorteile und vorteilhafte Weiterbildungen der Erfindung ergeben sich aus den Ansprüchen und dem unter Bezugnahme auf die Zeichnung prinzipmäßig beschriebenen Ausführungsbeispiel.

### KURZE BESCHREIBUNG DER ZEICHNUNG

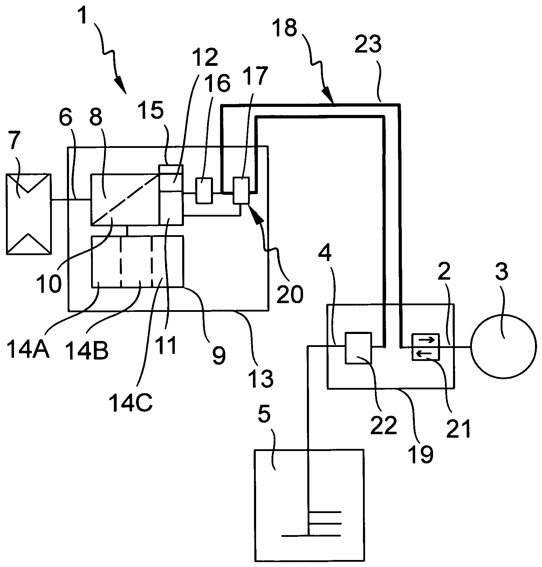

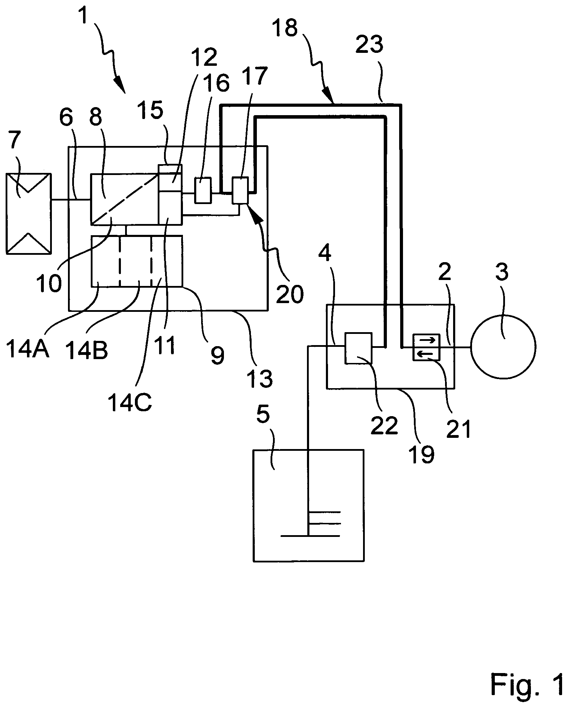

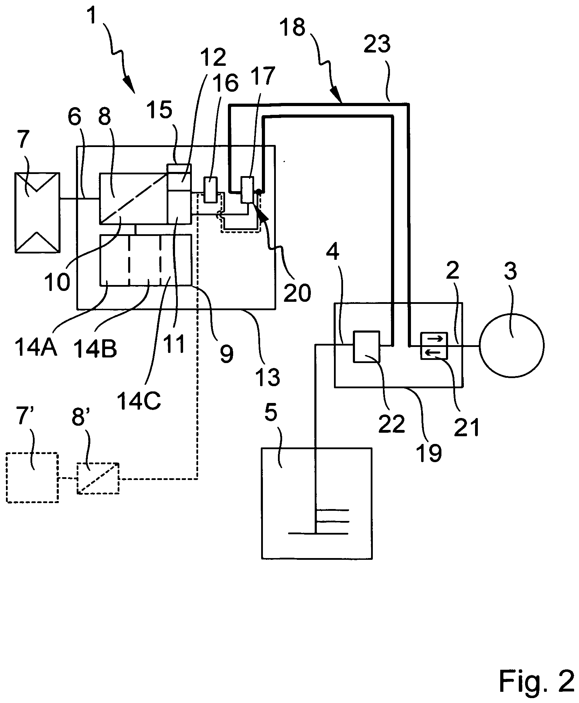

Ausführungsbeispiele einer erfindungsgemäß ausgestalteten Stromversorgungsanlage eines Hauses, welche mit einer Photovoltaikanlage und einem öffentlichen Stromnetz verbunden ist, sind in Fig. 1 und Fig. 2 der Zeichnung vereinfacht als Prinzipskizze dargestellt und werden nachfolgend näher erläutert.

### AUSFÜHRUNGSFORMEN DER ERFINDUNG

Bezug nehmend auf die Figuren der Zeichnung ist eine Vorrichtung 1 zur Versorgung eines Hauses mit elektrischer Energie dargestellt, wobei die Vorrichtung 1 über eine Netzanschlusseinheit 2 zur Energieflussverbindung mit einem externen, öffentlichen Energienetz 3 und über eine Lastanschlusseinheit 4 mit einem dreiphasigen Hausnetz 5 verbunden ist.

Weiterhin umfasst die Vorrichtung 1 einen Anschluss 6 an eine vorliegend als Photovoltaikanlage ausgebildete Energieerzeugungseinrichtung 7 mit einer als Solarwechselrichter ausgebildeten ersten Wechselrichtereinheit 8 und eine als Akkumulatorvorrichtung ausgebildete Energiespeichereinheit 9 mit einer zugehörigen als Batteriewechselrichter ausgebildeten zweiten Wechselrichtereinheit 10. Die Solarwechselrichtereinheit 8 und die Batteriewechselrichtereinheit 10 sind bei der gezeigten Ausführung als ein kombinierter Solar-/Batteriewechselrichter ausgebildet.

Der Solar-/Batteriewechselrichter 8, 10 ist zusammen mit einer Schaltvorrichtung 11 und einer eine Rechnereinheit aufweisenden intelligenten Steuervorrichtung 12, welche zur Ausführung eines elektronischen Energiemanagements ausgelegt ist, integral in einem schrankartigen Gehäuse 13 angeordnet. Bauraumtechnisch ist das Gehäuse 13 modular aufgebaut mit einem Unterbringungsraum für die Akkumulatorvorrichtung 9, welche bei der gezeigten Ausführung mit modularen Aufnahmeplätzen zur berührungsgesicherten-Aufnahme austauschbarer Batterien 14A, 14B, 14C ausgebildet ist, einem daneben, darüber oder darunter angeordneten Aufnahmeraum für die kombinierten Solar-/Batteriewechselrichtereinheiten 8, 10, einem Aufnahmeraum für die integral in dem Gehäuse 13 ausgebildete Schaltvorrichtung 11, einem Aufnahmeraum für die Steuervorrichtung 12 mit einer beispielsweise als Touch-Display ausgeführten Anzeigeeinrichtung 15, über die alle wesentlichen Funktionen einfach angesteuert werden können und alle Informationen zu Solarleistung, Batterieladezustand und Stromeinspeisung bzw. -bezug abgelesen werden können, einem Aufnahmeraum für eine Messvorrichtung bzw. Messeinheit 16 zur Messung der am Anschluss 6 der Photovoltaikanlage 7 zugeführten elektrischen Leistung und eine weitere als Eigenstromzähler ausgebildete Messvorrichtung bzw. Messeinheit 17 zur dreiphasigen Messung der elektrischen Leistung der an der Lastanschlusseinheit 4 anliegenden elektrischen Leistung des Hausnetzes 5.

Bauraumtechnisch sind die Messvorrichtungen bzw. Zähler 16, 17 wiederum zu einer Komponente als Messmodul 20 zusammengefasst.

Das Gehäuse 13 ist mit integrierten Signal- und Leistungsleitungen ausgebildet, wobei die einzelnen Komponenten je nach Ausgestaltung gegebenenfalls über Steckverbindungen hiermit oder auch über Steckverbindungen untereinander kabellos in dem Gehäuse 13 angeordnet werden können.

Über ein Kabel 18 ist das Gehäuse 13 mit einem so genannten Hausanschlusskasten 19 verbunden, welcher die Netzanschlusseinheit 2 an das externe Energienetz 3 und die Lastanschlusseinheit 4 für das dreiphasige Hausnetz 5 bildet. Innerhalb des Hausanschlusskastens 19 zweigt von den dreiphasigen Anschlüssen an das externe Energienetz 3 und das Hausnetz 5 zwischen einer versorgerseitig üblicherweise vorgesehenen, jedoch technisch nicht erforderlichen Bezugs-/Einspeisemessvorrichtung 21 und einer Sicherungseinheit 22 eine dreiphasige in dem Kabel 18 angeordnete Leitungsschleife 23 zu dem Gehäuse 13 ab. In dem Gehäuse 13 ist die Leiterschleife 23 mit dem Messmodul 20 zur dreiphasigen Strommessung verbunden und elektrisch leitend mit den Wechselrichtereinheiten 8, 10 der Photovoltaikanlage 7 und der Akkumulatorvorrichtung 9 verschaltbar.

Das Gehäuse 13 mit den darin angeordneten Komponenten der Solar- und Batteriewechselrichtereinheiten 8, 10, der Akkumulatorvorrichtung 9, der Schaltvorrichtung 11, deren Rückwand beispielsweise zugleich die Front der kombinierten Solar- und Batteriewechselrichtereinheiten 8, 10 bilden kann, und der mit der Anzeigevorrichtung 15 verbundenen intelligenten Steuervorrichtung 12 bildet ein kompaktes, optisch einheitliches und beispielsweise durch eine Tür abdeckbares Gerät, welches mit geringem Bauraumbedarf in einem privaten Eigenheim oder einem Kleinbetrieb installierbar ist.

Installationstechnisch stellt die gezeigte Vorrichtung 1 eine "Mount & Use"-Lösung dar, d. h. sie kann ohne größeren Installationsaufwand aufgestellt und in Betrieb genommen werden, wobei weder an den Verbrauchern selbst noch an Steckdosen der Verbraucher Veränderungen vorgenommen werden müssen.

In weiteren Ausgestaltungen sind selbstverständlich unterschiedlichste Ausbaustufen der Vorrichtung 1 denkbar, wobei die Steuervorrichtung 12 nicht nur mit einem externen Rechner zum Abrufen aller Daten und zum Update von Software und Applikationen verbunden sein kann, sondern auch über ein Smartphone ferngesteuert werden kann.

Die Fig. 2 zeigt beispielsweise eine Ausbaustufe, bei der eine weitere Energieerzeugungseinrichtung 7' mit einer zugeordneten Wechselrichtereinheit 8' mit der Leiterschleife 23 verschaltet ist, wobei die Art der Energieerzeugungseinrichtung 7' unerheblich ist. Es kann sich dabei um eine weitere Photovoltaikanlage, eine Windradanlage, ein Blockheizkraftwerk, eine Brennstoffzelle oder auch um einen Generator handeln. Auch können mehrere zusätzliche Wechselrichtereinheiten und Energieerzeugungseinrichtungen zugeschaltet sein. Das Messmodul 20 misst stets voll redundant zu der Bezugs-/Einspeisemesseinrichtung 21 die hieran anliegende elektrische Leistung und ermöglicht automatisch eine situationsangepasste Steuerung der Ein- bzw. Ausspeisung, da die Energieflüsse auch nicht elektronisch miteinander kommunizierender Wechselrichtereinheiten hierüber bekannt sind.

Es versteht sich, dass der Fachmann den Punkt der Verschaltung einer oder mehrerer Wechselrichtereinheiten mit der Leitungsschleife 23 je nach den gegebenen Anforderungen frei wählen kann. Eine in Fig. 2 gezeigte gemeinsame Einspeisung an einem Punkt hausanschlussseitig des Messmoduls 20 hat den Vorteil, dass die an der ersten, in der Leitungsschleife angeordnete Messeinrichtung 17 genau die an der Netzanschlusseinheit 2 anliegende elektrische Leistung erfasst, wodurch sich eine zusätzliche rechnerische Ermittlung unter Berücksichtigung der von der zweiten Messeinrichtung erfassten Leistung erübrigt. Die zweite Messeinrichtung 16 kann dabei auch völlig entfallen, wenngleich sie zur Eigenstromeinspeisungsmessung vorteilhaft ist. Andererseits hat eine in Fig. 1 gezeigte Verschaltung mit der Leitungsschleife 23 netzanschlussseitig der ersten Messvorrichtung 17 des Messmoduls 20 den Vorteil einer direkten Messung des Hausverbrauchs.

Leistungstechnisch kann die dargestellte Vorrichtung von einer bilanziellen Optimierung des Stromverbrauchs bis hin zu einer Autarkielösung ausgestaltet sein, wobei zur bilanziellen Optimierung des Stromverbrauchs eines privaten Eigenheims oder Kleinstbetriebes bis 6.000 kWh Jahresverbrauch der maximale Batteriestrom z. B. auf 1.500 W begrenzt sein kann.

Durch die modulare Ausgestaltung der Vorrichtung und die Erweiterbarkeit der Akkumulatorvorrichtung 9, bei der vorzugsweise Lithium-Ionen-Batterien zur Anwendung kommen, kann die Vorrichtung den spezifischen Anforderungen in Hinblick auf einen minimierten Netzbezug und maximale Wirtschaftlichkeit flexibel angepasst werden, wobei durch weitere Anschlüsse, wie z. B. für einen Akkumulator eines Elektromobils zur Einspeisung von elektrischer Energie in diesen externen Akkumulator als auch zur Entnahme hiervon, eine Kombination mit beliebigen Gleichstrom- und Wechselstromquellen möglich ist.

## Patentansprüche

1. Vorrichtung zur Versorgung eines Hauses mit elektrischer Energie, umfassend
- eine Netzanschlusseinheit (2) zur Energieflussverbindung mit einem externen Energienetz (3);
- eine Lastanschlusseinheit (4) für ein dreiphasiges Hausnetz (5);
- wenigstens eine Wechselrichtereinheit (8,8',10);
- eine Energiespeichereinheit (9);
- eine Steuereinheit (12) und
- eine Schalteinheit (11) und
- ein dreiphasiges Messmodul (20) mit einer ersten Messvorrichtung;
wobei die wenigstens eine Wechselrichtereinheit (8,8',10) zur Umwandlung von Energie aus der Energiespeichereinheit (9) und einer Energieerzeugungseinrichtung (7,7') ausgebildet ist;
wobei ein Eingang des dreiphasigen Messmoduls (20) elektrisch leitend über eine elektrische Verbindung mit einem Ausgang der wenigstens einen Wechselrichtereinheit (8,8',10) verbunden ist;
wobei die Netzanschlusseinheit (2) über eine erste elektrische Leitung elektrisch leitend mit dem Eingang des dreiphasigen Messmoduls (20) verbunden ist; und
wobei die Lastanschlusseinheit (4) elektrisch leitend über eine zweite elektrische Leitung mit einem Ausgang des dreiphasigen Messmoduls (20) verbunden ist;
**dadurch gekennzeichnet, dass**
- die Wechselrichter- (8,8',10), Energiespeicher- (9), Steuer- (12) und Schalteinheiten (11) und das dreiphasige Messmodul in einem von der Netzanschlusseinheit (2) und Lastanschlusseinheit (4) separaten Gehäuse (13) angeordnet sind, dem zur geräteinternen vollständigen dreiphasigen Energiemessung das Messmodul (20) zugeordnet ist; und
- die erste Messvorrichtung (17) die an der Lastanschlusseinheit (4) anliegende elektrische Leistung des Hausnetzes (5) erfasst.

2. Vorrichtung nach Anspruch 1,
**dadurch gekennzeichnet, dass**
diese einen Anschluss (6) an eine Energieerzeugungseinrichtung (7, 7'), insbesondere eine Photovoltaikanlage, zum Erzeugen von Energie aus einer insbesondere regenerativen Energiequelle umfasst, wobei der Energieerzeugungseinrichtung (7) eine erste Wechselrichtereinheit (8) zugeordnet ist.

3. Vorrichtung nach Anspruch 1 oder 2,
**dadurch gekennzeichnet, dass**
eine zweite Wechselrichtereinheit (10) der insbesondere als Akkumulatorvorrichtung ausgebildeten Energiespeichereinheit (9) zugeordnet ist.

4. Vorrichtung nach einem der Ansprüche 1 bis 3,
**dadurch gekennzeichnet, dass**
das Messmodul (20) eine zweite Messvorrichtung (16) zur Messung der von einer Energieerzeugungseinrichtung (7,7') zugeführten elektrischen Leistung aufweist.

5. Vorrichtung nach einem der Ansprüche 1 bis 4,
**dadurch gekennzeichnet, dass**
das Messmodul (20) in dem Gehäuse (13) angeordnet ist.

6. Vorrichtung nach einem der Ansprüche 1 bis 4,
**dadurch gekennzeichnet, dass**
das Messmodul (20) in einer von dem Gehäuse (13) separaten Einhausung angeordnet ist.

7. Vorrichtung nach einem der Ansprüche 1 bis 6,
**dadurch gekennzeichnet, dass**
die Netzanschlusseinheit (2) und die Lastanschlusseinheit (4) des Hausnetzes (5) in einem Hausanschlusskasten (19) angeordnet sind, aus dem die erste und zweite elektrische Leitung zu dem Messmodul (20) führen und dabei eine Leitungsschleife (23) bilden, wobei die weg- und rückführenden Schleifenbereiche vorzugsweise zu einem zu dem Gehäuse (13) führenden Kabel (18) zusammengefasst sind.

8. Vorrichtung nach einem der Ansprüche 1 bis 7,
**dadurch gekennzeichnet, dass**
die Aus- und Einführung der ersten elektrischen Leitung zwischen einer der Netzanschlusseinheit (2) vorgeschalteten Bezugs-/Einspeisemessvorrichtung (21) und einer der Lastanschlusseinheit (4) vorgeschalteten Sicherungseinheit (22) in dem Hausanschlusskasten (19) angeordnet ist.

9. Vorrichtung nach einem der Ansprüche 1 bis 8,
**dadurch gekennzeichnet, dass**
die Schalteinheit (11) mit den Wechselrichtereinheiten (8,8',10) der Energieerzeugungseinrichtung (7,7') und der Energiespeichereinheit (9) integral in dem Gehäuse (13) angeordnet ist.

10. Vorrichtung nach einem der Ansprüche 1 bis 9,
**dadurch gekennzeichnet, dass**
das Gehäuse (13) einen Schaltschrank mit Zähler bildet.

11. Vorrichtung nach einem der Ansprüche 1 bis 10,
**dadurch gekennzeichnet, dass**
die Energiespeichereinheit (9) insbesondere als Akkumulatorvorrichtung mit modularen Aufnahmeplätzen zur Aufnahme austauschbarer Batterien (14A, 14B, 14C) ausgebildet ist.

12. Vorrichtung nach einem der Ansprüche 1 bis 11,
**dadurch gekennzeichnet, dass**
die Wechselrichtereinheiten (8, 10) der Energieerzeugungseinrichtung (7) und der Energiespeichereinheit (9) als ein integraler Solar-/Batteriewechselrichter ausgebildet sind.

13. Vorrichtung nach einem der Ansprüche 1 bis 12,
**dadurch gekennzeichnet, dass**
die wenigstens eine Wechselrichtereinheit (8,8',10) einer zugeordneten Energieerzeugungseinrichtung (7,7') und/oder Energiespeichereinheit (9) hausanschlussseitig des Messmoduls (20) mit der zweiten elektrischen Leitung verschaltet ist.

## Claims

1. A device for supplying a house with electrical energy, said device comprising
- a grid connection unit (2) for energy flow connection to an external energy grid (3);
- a load connection unit (4) for a three-phase house grid (5);
- at least one inverter unit (8,8',10);
- an energy storage unit (9);
- a control unit (12), and
- a switching unit (11), and
- a three-phase measuring module (20) comprising a first measuring device; wherein the at least one inverter unit (8,8',10) is provided to convert energy from the energy storage unit (9) and an energy generation unit (7,7');
wherein an input of the three-phase measuring module (20) is connected in an electrically conductive manner to an output of the at least one inverter unit (8,8',10) via an electrical connection;
wherein the grid connection unit (2) is connected in an electrically conductive manner to the input of the three-phase measuring module (20) via a first electric line, and wherein the load connection unit (4) is connected in an electrically conductive manner to an output of the three-phase measuring module (20) via a second electric line;
**characterized in that**
- the inverter (8, 8', 10), energy storage (9), control (12) and switching units (11) and the three-phase measuring module are arranged in a housing (13), which is separate from the grid connection unit (2) and the load connection unit (4) and which has the measuring module (20) assigned to it for full three-phase energy measurement within the device, and
- the first measuring device (17) measures the electrical power of the house grid (5) applied to the load connection unit (4).

2. The device according to claim 1, **characterized in that** it comprises a connection (6) to an energy generation unit (7, 7'), in particular a photovoltaic system, to generate energy, in particular from a regenerative source of energy, said energy generation unit (7) having a first inverter unit (8) assigned to it.

3. The device according to claim 1 or 2, **characterized in that** a second inverter unit (10) is assigned to the energy storage unit (9) which is provided, in particular, as an accumulator device.

4. The device according to any one of claims 1 to 3, **characterized in that** the measuring module (20) comprises a second measuring device (16) for measuring the electrical power supplied by an energy generation unit (7,7').

5. The device according to any one of claims 1 to 4, **characterized in that** the measuring module (20) is arranged in the housing (13).

6. The device according to any one of claims 1 to 4, **characterized in that** the measuring module (20) is arranged in an enclosure which is separate from the housing (13).

7. The device according to any one of claims 1 to 6, **characterized in that** the grid connection unit (2) and the load connection unit (4) of the house grid (5) are arranged in a house connection box (19), from which the first first and second electric lines lead to the measuring module (20), thus forming a loop (23), wherein the loop portions leading away and leading back are preferably combined in a cable (18) leading to the housing (13).

8. The device according to any one of claims 1 to 7, **characterized in that** the outlet and the inlet of the first electric line is arranged between a reference/feed measuring device (21) arranged upstream of the grid connection unit (2) and a fuse unit (22) arranged upstream of the load connection unit (4) in the house connection box (19).

9. The device according to any one of claims 1 to 8, **characterized in that** the switching unit (11) is arranged integrally with the inverter units (8,8',10) of the energy generation unit (7,7') and the energy storage unit (9) in the housing (13).

10. The device according to any one of claims 1 to 9, **characterized in that** the housing (13) forms a switch cabinet with a meter.

11. The device according to any one of claims 1 to 10, **characterized in that** the energy storage unit (9) is provided, in particular, as an accumulator device with modular receptacles designed to receive exchangeable batteries (14A, 14B, 14C).

12. The device according to any one of claims 1 to 11, **characterized in that** the inverter units (8, 10) of the energy generation unit (7) and the energy storage unit (9) are provided as an integral solar/battery inverter.

13. The device according to any one of claims 1 to 12, **characterized in that** the at least one inverter unit (8,8',10) of an assigned energy generation unit (7,7') and/or energy storage unit (9) is interconnected, on the house connection side of the measuring module (20), with the second electric line.

## Revendications

1. Dispositif d'alimentation d'une habitation en énergie électrique, ledit dispositif comportant:
- une unité de raccordement réseau (2) pour un raccordement à flux d'énergie à un réseau énergétique externe (3);
- une unitè de raccordement de charge (4) pour un réseau domestique triphasé (5);
- au moins une unité d'onduleur (8,8',10);
- une unité de stockage d'énergie (9);
- une unité de commande (12), et
- une unité de commutation (11), et
- un module de mesure triphasé (20) comportant un premier dispositif de mesure; l'au moins une unité d'onduleur (8,8',10) étant réalisée de manière à convertir l'énergie de l'unité de stockage d'énergie (9) et d'une unité de production d'énergie (7,7');
une entrée du module de mesure triphasé (20) étant reliée en conduction électrique avec une sortie de l'au moins une unité d'onduleur (8,8',10) par une liaison électrique;
l'unité de raccordement réseau (2) étant reliée en conduction électrique avec l'entrée du module de mesure triphasé (20) par une première ligne électrique, et
l'unitè de raccordement de charge (4) étant reliée en conduction électrique avec une sortie du module de mesure triphasé (20) par une deuxième ligne électrique;
ledit dispositif étant **caractérisé en ce que**
- les unités d'onduleur (8, 8',10), de stockage d'énergie (9), de commande (12) et de commutation (11) et le module de mesure triphasé sont disposés dans un boîtier (13), qui est séparé de l'unité de raccordement réseau (2) et de l'unitè de raccordement de charge (4) et auquel est associé le module de mesure (20) pour une mesure d'énergie triphasée complète dans le dispositif, et
- le premier dispositif de mesure (17) mesure la puissance électrique du réseau domestique (5) appliquée à l'unitè de raccordement de charge (4).

2. Dispositif selon la revendication 1, **caractérisé en ce qu'**il comporte une liaison (6) avec une unité de production d'énergie (7, 7'), notamment une installation photovoltaïque, pour produire de l'énergie, notamment à partir d'une source d'énergie renouvelable, une première unité d'onduleur (8) étant associée avec ladite unité de production d'énergie (7).

3. Dispositif selon la revendication 1 ou 2, **caractérisé en ce qu'**une deuxième unité d'onduleur (10) est associée avec l'unité de stockage d'énergie (9) qui est réalisée notamment sous forme d'un dispositif accumulateur.

4. Dispositif selon l'une quelconque des revendications 1 à 3, **caractérisé en ce que** le module de mesure (20) comporte un deuxième dispositif de mesure (16) pour mesurer la puissance électrique apportée par une unité de production d'énergie (7,7').

5. Dispositif selon l'une quelconque des revendications 1 à 4, **caractérisé en ce que** le module de mesure (20) est disposé dans le boîtier (13).

6. Dispositif selon l'une quelconque des revendications 1 à 4, **caractérisé en ce que** le module de mesure (20) est disposé dans une enceinte qui est séparée du boîtier (13).

7. Dispositif selon l'une quelconque des revendications 1 à 6, **caractérisé en ce que** l'unité de raccordement réseau (2) et l'unitè de raccordement de charge (4) du réseau domestique (5) sont disposées dans un boîtier de raccordement domestique (19), à partir duquel la première et la deuxième ligne électrique mènent au module de mesure (20) en constituant une boucle (23), dont les régions s'éloignant et les régions amenant vers la boucle sont de préférence combinées dans une câble (18) menant au boîtier (13).

8. Dispositif selon l'une quelconque des revendications 1 à 7, **caractérisé en ce que** la sortie et l'entrée de la première ligne électrique est disposée entre un dispositif de mesure de référence/d'alimentation (21) disposé en amont de l'unité de raccordement réseau (2) et une unité de fusible (22) disposée en amont de l'unitè de raccordement de charge (4) dansl le boîtier de raccordement domestique (19).

9. Dispositif selon l'une quelconque des revendications 1 à 8, **caractérisé en ce que** l'unité de commutation (11) est disposée dans le boîtier (13) de manière intégrale avec les unités d'onduleur (8,8',10) de l'unité de production d'énergie (7,7') et de l'unité de stockage d'énergie (9).

10. Dispositif selon l'une quelconque des revendications 1 à 9, **caractérisé en ce que** le boîtier (13) constitue une armoire de commande comportant un compteur.

11. Dispositif selon l'une quelconque des revendications 1 à 10, **caractérisé en ce que** l'unité de stockage d'énergie (9) est réalisée notamment sous forme d'un dispositif accumulateur présentant des logements modulaires destinés à recevoir des batteries interchangeables (14A, 14B, 14C).

12. Dispositif selon l'une quelconque des revendications 1 à 11, **caractérisé en ce que** les unités d'onduleur (8, 10) de l'unité de production d'énergie (7') et de l'unité de stockage d'énergie (9) sont réalisées sous forme d'onduleurs solaires/à batterie intégrés.

13. Dispositif selon l'une quelconque des revendications 1 à 12, **caractérisé en ce que** ladite au moins une unité d'onduleur (8,8',10) d'une unité de production d'énergie (7,7') et/ou unité de stockage d'énergie (9) associée(s) est interconnecté, du côté du raccordement domestique du module de mesure (20), avec la deuxième ligne électrique.
